# EUROPÄISCHE PATENTSCHRIFT

(11) **EP 3 672 835 B1**
(45) Veröffentlichungstag und Bekanntmachung des Hinweises auf die Patenterteilung: **13.10.2021**
(21) Anmeldenummer: 18758551.8
(22) Anmeldetag: 06.08.2018
(51) Int. Cl.: B60R 13/01

(54) **EINLEGEBAUTEIL FÜR EIN INNENRAUMBAUTEIL EINES FAHRZEUGS, INNENRAUMBAUTEIL FÜR EIN FAHRZEUG SOWIE FAHRZEUG**
INSERT COMPONENT FOR AN INTERIOR COMPONENT OF A VEHICLE, INTERIOR COMPONENT FOR A VEHICLE, AND VEHICLE
ÉLÉMENT D'INSERTION POUR UN ÉLÉMENT D'HABITACLE D'UN VÉHICULE, ÉLÉMENT D'HABITACLE POUR UN VÉHICULE AINSI QUE VÉHICULE

(30) Priorität: 25.08.2017 DE 102017214885
(43) Veröffentlichungstag der Anmeldung: 01.07.2020
(73) Patentinhaber: Bayerische Motoren Werke Aktiengesellschaft, 80809 München (DE)
(72) Erfinder: HATTENSPERGER, Michael, 84416 Inning am Holz (DE); FISCHER, Stefan, 84144 Geisenhausen (DE)
(86) Internationale Anmeldenummer: PCT/EP2018/071258
(87) Internationale Veröffentlichungsnummer: WO 2019/038069

(56) Entgegenhaltungen:
- DE-A1-102011 010 881
- DE-U1-202008 017 784
- US-A1- 2010 123 332

## Beschreibung

Die vorliegende Erfindung betrifft ein Einlegebauteil für ein Innenraumbauteil eines Fahrzeugs, das Innenraumbauteil zumindest aufweisend das Einlegebauteil, ein Formhautelement und einen in einem Schäumprozess zwischen dem Einlegebauteil und dem Formhautelement eingebrachten Schaumkörper, wobei das Einlegebauteil, einen Körperabschnitt zum Verbleib im Innenraumbauteil und einen Randabschnitt zum Unterstützen der Herstellung des Innenraumbauteils aufweist. Ferner betrifft die Erfindung ein Innenraumbauteil für ein Fahrzeug, das Innenraumbauteil zumindest, aufweisend das Einlegebauteil, ein Formhautelement und einen in einem Schäumprozess zwischen dem Einlegebauteil und dem Formhautelement eingebrachten Schaumkörper. Darüber hinaus betrifft die vorliegende Erfindung ein Fahrzeug mit einem Innenraumbauteil.

In der modernen Technik ist es weitläufig bekannt, Innenraumbauteile von Fahrzeugen zu verwenden, die aus mehreren Komponenten bestehen. Zumeist weisen derartige Innenraumbauteile ein Einlegebauteil auf, durch das oftmals zumindest im Wesentlichen die Form des Innenraumbauteils bestimmt wird und durch das ein Großteil der Stabilität des Innenraumbauteils bereitgestellt wird. Eine Oberfläche des Innenraumbauteils wird zumeist durch ein Formhautelement gebildet, durch das verschiedenste haptische Oberflächenbeschaffenheiten und/oder Eigenschaften bereitgestellt werden können. Zwischen dem Einlegebauteil und dem Formhautelement wird bei der Herstellung von Innenraumbauteilen für Fahrzeuge in einem Schäumprozess ein Schaumkörper eingebracht. Nahezu beliebige Geometrien für Innenraumbauteile von Fahrzeugen können dadurch bereitgestellt werden, wobei durch die Verwendung eines Schaumkörpers insbesondere Gewicht eingespart werden kann.

Um das Schäumverfahren zur Herstellung des Innenraumbauteils durchführen zu können, weisen bekannte Einlegebauteile einen Randbereich mit einem Klemmrand auf. Dieser Klemmrand ist nur für die Herstellung, insbesondere den Schäumprozess des Innenraumbauteils, nötig und wird im Anschluss daran entfernt. Bekannte Einlegebauteile weisen eine durchgehende Dicke auf, insbesondere auch im Randabschnitt. Der dadurch starr ausgebildete Randabschnitt führt, insbesondere durch einen zumeist bei der Herstellung des Einlegebauteils entstehenden vorhandenen Bauteilverzug, zu einem hohen Abstimmaufwand, insbesondere um das Werkzeug, welches beim Schäumprozess verwendet wird, auf das Einlegebauteil abzustimmen. Insbesondere können Anpassungen der Schäumwerkzeuge an die Realgeometrie des Einlegebauteils nötig sein. Ferner kann es durch den zumeist nicht vermeidbaren Bauteilverzug des Einlegebauteils, insbesondere durch die Eigensteifigkeit des Randabschnitts bei der Herstellung des Innenraumbauteils, zu einem Kontakt des Formhautelements und des Randabschnitts kommen. Dies kann zu Oberflächenfehlern am Innenraumbauteil führen. Eine Qualität des Innenraumbauteils kann dadurch vermindert werden, bis hin zu einer völligen Unbrauchbarkeit des produzierten Innenraumbauteils. Da der Randabschnitt nach der Herstellung des Innenraumbauteils entfernt wird, geht darüber hinaus das für den Randabschnitt verwendete Material verloren. Auch dies stellt einen Nachteil der Einlegebauteile gemäß dem Stand der Technik dar.

Es ist daher Aufgabe der vorliegenden Erfindung, die voranstehend beschriebenen Nachteile bei Einlegebauteilen für Innenraumbauteile eines Fahrzeugs, bei Innenraumbauteilen für ein Fahrzeug sowie bei Fahrzeugen zumindest teilweise zu beheben. Insbesondere ist es Aufgabe der vorliegenden Erfindung, ein Einlegebauteil, ein Innenraumbauteil sowie ein Fahrzeug bereitzustellen, die auf eine einfache und kostengünstige Art und Weise eine Herstellung eines Innenraumbauteils verbessern, wobei insbesondere eine Verringerung eines Materialverbrauchs sowie eine Steigerung der Qualität des hergestellten Innenraumbauteils bereitgestellt werden sollen.

Voranstehende Aufgabe wird gelöst durch ein Einlegebauteil für ein Innenraumbauteil eines Fahrzeugs mit den Merkmalen des unabhängigen Anspruchs 1. Ferner wird die Aufgabe durch ein Innenraumbauteil für ein Fahrzeug mit den Merkmalen des nebengeordneten Anspruchs 7 sowie durch ein Fahrzeug mit einem Innenraumbauteil mit den Merkmalen des nebengeordneten Anspruchs 11 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Einlegebauteil beschrieben sind, selbstverständlich auch im Zusammenhang mit dem erfindungsgemäßen Innenraumbauteil sowie dem erfindungsgemäßen Fahrzeug und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Einlegebauteil für ein Innenraumbauteil eines Fahrzeugs, das Innenraumbauteil zumindest aufweisend das Einlegebauteil, ein Formhautelement und einen in einem Schäumprozess zwischen dem Einlegebauteil und dem Formhautelement eingebrachten Schaumkörper, wobei das Einlegebauteil, einen Körperabschnitt zum Verbleib im Innenraumbauteil und einen Randabschnitt zum Unterstützen der Herstellung des Innenraumbauteils aufweist. Ein erfindungsgemäßes Einlegebauteil ist dadurch gekennzeichnet, dass der Randabschnitt zumindest teilweise eine im Vergleich zum Körperabschnitt geringere Dicke aufweist.

Ein erfindungsgemäßes Einlegebauteil kann zur Herstellung eines Innenraumbauteils eines Fahrzeugs verwendet werden. Ein derartiges Innenraumbauteil weist zumindest das Einlegebauteil, ein Formhautelement und einen in einem Schäumprozess zwischen dem Einlegebauteil und dem Formhautelement eingebrachten Schaumkörper auf. Bei der Herstellung des Innenraumbauteils werden das Einlegebauteil und das Formhautelement in ein Schäumwerkzeug eingelegt und Material für den Schaumkörper zwischen dem Einlegebauteil und dem Formhautelement eingebracht und dort aufgeschäumt. Bevorzugt nach einem Aushärten des Schaumkörpers wird der Randabschnitt des Einlegebauteils, insbesondere auch der Abschnitt des Schaumkörpers und des Formhautelements, die auf dem Randabschnitt angeordnet sind, entfernt. Der Kernabschnitt des Einlegebauteils verbleibt im fertig hergestellten Innenraumbauteil.

Erfindungswesentlich ist vorgesehen, dass der Randabschnitt zumindest teilweise eine im Vergleich zum Körperabschnitt geringere Dicke aufweist. Der Körperabschnitt des Einlegebauteils weist eine Dicke auf, die eine Stabilität des Einlegebauteils, und dadurch des gesamten später hergestellten Innenraumbauteils sicherstellt.

Da der Randabschnitt nach dem Schäumprozess entfernt wird, muss dieser diese Stabilitätskriterien nicht erfüllen. Eine geringere Dicke im Sinne der Erfindung kann beispielsweise bedeuten, dass der Randabschnitt zumindest teilweise eine Dicke aufweist, die geringer als ein Drittel der Dicke, bevorzugt geringer als ein Zehntel der Dicke, des Körperabschnitts ausgebildet ist. Eine Länge des Teils des Randabschnitts, der eine im Vergleich zum Körperabschnitt geringere Dicke aufweist, kann insbesondere 40 mm bis 80 mm oder länger betragen. Besonders bevorzugt ist ein Großteil des Randabschnitts mit einer derartig geringeren Dicke ausgebildet, insbesondere 75 % des Randabschnitts, besonders bevorzugt 90 % oder mehr des Randabschnitts.

Eine derartig geringere Dicke des Randabschnitts im Vergleich zum Körperabschnitt bringt mehrere Vorteile mit sich. Zum einen wird durch die geringere Dicke des Randabschnitts automatisch bei der Herstellung des Randabschnitts ein Materialverbrauch gesenkt, wodurch insgesamt ein erfindungsgemäßes Einlegebauteil mit einem geringeren Materialaufwand hergestellt werden kann. Bereits hierdurch können Kosten bei der Herstellung eines erfindungsgemäßen Einlegebauteils und somit auch eines erfindungsgemäßen Innenraumbauteils gesenkt werden.

Darüber hinaus weist der Randabschnitt, zumindest der Teil des Randabschnitts, der eine im Vergleich zum Körperabschnitt geringere Dicke aufweist, auch eine geringere Stabilität im Vergleich zum Körperabschnitt auf. Ein bei der Herstellung des Einlegebauteils entstandener Bauteilverzug kann auf diese Weise beim Einliegen in das Schäumwerkzeug vor dem Schäumprozess zur Herstellung des Innenraumbauteils oftmals bereits durch den Randabschnitt mit der geringeren Dicke ausgeglichen werden, beispielsweise durch ein leichtes Verformen des entsprechenden Teils des Randabschnitts. Ein geringerer Abstimmaufwand zwischen dem Einlegebauteil und dem Schäumwerkzeug kann daraus erfolgen.

Ferner kann beim Schäumprozess während der Herstellung des Innenraumbauteils selbst dann, wenn das Formhautelement am Randabschnitt anliegt, durch die geringere Stabilität des Randabschnitts mit der geringeren Dicke dieser dem aufschäumenden Schaumkörper ausweichen, so dass der Schäumprozess auch in diesem Fall ohne Behinderung durchgeführt werden kann. Eine Steigerung der Qualität und insbesondere eine Senkung der als Ausschuss produzierten Innenraumbauteile können dadurch bereitgestellt werden.

Insgesamt können somit durch ein erfindungsgemäßes Einlegebauteil bereits bei der Herstellung des Einlegebauteils Kosten eingespart werden. Auch die spätere Herstellung eines Innenraumbauteils mit einem derartigen Einlegebauteil kann verbessert werden, insbesondere hinsichtlich eines Zeit- und/oder Abstimmungsaufwands bei einem Einlegen des Einlegebauteils in ein Schäumwerkzeug sowie durch die allgemeine Steigerung der Qualität des hergestellten Innenraumbauteils.

Ferner kann bei einem erfindungsgemäßen Einlegebauteil vorgesehen sein, dass der Randabschnitt an Stellen geringerer Dicke eine Dicke von kleiner 1 mm, insbesondere kleiner 0,8 mm, bevorzugt kleiner 0,6 mm aufweist. Auch noch kleinere Dicken können, solange das Material des Einlegebauteils dies ermöglicht, durch ein erfindungsgemäßes Einlegebauteil ausgewiesen werden. Durch eine Dicke von kleiner 1 mm, insbesondere kleiner 0,8 mm, bevorzugt kleiner 0,6 mm, kann insbesondere sichergestellt werden, dass die oben beschriebenen Vorteile eines erfindungsgemäßen Einlegebauteils bereitgestellt werden können. Randbereiche mit diesen Dicken können zum einen mit geringem Materialaufwand hergestellt werden und weisen zumeist ferner eine derartig geringe Stabilität auf, dass ein Einlegen in ein Schäumwerkzeug besonders einfach möglich ist und auch der Schäumprozess beim Einbringen des Schaumkörpers zwischen dem Einlegebauteil und dem Formhautelement bei der Herstellung des Innenraumbauteils unterstützt wird.

Besonders bevorzugt kann bei einem erfindungsgemäßen Einlegebauteil ferner vorgesehen sein, dass der Randabschnitt zumindest abschnittsweise flexibel ausgebildet ist. Insbesondere durch die geringere Dicke kann, wie oben bereits beschrieben, eine geringere Stabilität des Randabschnitts bereitgestellt werden. Besonders bevorzugt ist diese geringere Stabilität derart ausgebildet, dass der Randabschnitt insbesondere in den Teilen des Randabschnitts, in denen er eine geringere Dicke aufweist, flexibel ausgebildet ist. Eine Sicherstellung der Vorteile, insbesondere eines Ausgleichs von beispielsweise einem Bauteilverzug beim hergestellten Einlegebauteil und auch eine Unterstützung des Schäumprozesses beim Einbringen des Schaumkörpers zwischen dem Einlegebauteil und dem Formhautelement bei der Herstellung des Innenraumbauteils können dadurch sichergestellt werden.

Auch kann ein erfindungsgemäßes Einlegebauteil dahin gehend ausgebildet sein, dass der Randabschnitt umlaufend am Körperabschnitt angeordnet ist. Umlaufend im Sinne der Erfindung kann insbesondere bedeuten, dass der Körperabschnitt des Einlegebauteils eine zusammenhängende, flächige Gestalt aufweist, und dass der Randabschnitt den gesamten Rand dieses flächig ausgebildeten Körperabschnitts umgibt. Mit anderen Worten ist der Körperabschnitt vollständig mit einem Randabschnitt des Einlegebauteils umgeben. Insbesondere bei der Herstellung des Innenraumbauteils kann dies von Vorteil sein, da zum einen ein Anordnen des Einlegers im Schäumwerkzeug zur Herstellung des Innenraumbauteils unterstützt und vereinfacht wird und zum anderen durch die Abtrennung des Randabschnitts nach dem Schäumprozess automatisch eine umlaufende, besonders genau definierbare Kante des Innenraumbauteils bereitgestellt werden kann. Eine Geometrie des Innenraumbauteils, insbesondere eines Rands des Innenraumbauteils, kann auf diese Weise durch einen umlaufend am Körperabschnitt angeordneten Randabschnitt des Einlegebauteils besonders einfach und insbesondere definiert bereitgestellt werden.

Auch kann ein erfindungsgemäßes Einlegebauteil dahin gehend ausgebildet sein, dass das Einlegebauteil in einem Spritzgussverfahren und/oder einem Spritzguss-Integralschaumverfahren hergestellt ist. Ein Spritzgussverfahren sowie ein Spritzguss-Integralschaumverfahren stellen jeweils eine besonders einfache Art und Weise dar, um ein erfindungsgemäßes Einlegebauteil herzustellen. Durch Spritzgussverfahren bzw. Spritzguss-Integralschaumverfahren kann eine hohe Variabilität von bereitstellbaren Geometrien eines Einlegebauteils, insbesondere hinsichtlich einer Form des Einlegebauteils, bereitgestellt werden. Spritzgussverfahren und Spritzguss-Integralschaumverfahren ermöglichen eine Produktion von Einlegebauteilen in hoher Stückzahl, wodurch wiederum niedrige Produktionskosten ermöglicht werden können.

Gemäß einer besonders bevorzugten Weiterentwicklung eines erfindungsgemäßen Einlegebauteils kann ferner vorgesehen sein, dass das Einlegebauteil in einem Spritzguss-Integralschaumverfahren hergestellt ist, wobei der Randabschnitt zumindest teilweise ohne aufgeschäumte Bereiche ausgebildet ist. Besonders bevorzugt bilden diese nicht aufgeschäumten Bereiche diejenigen Abschnitte des Randabschnitts, die eine geringere Dicke aufweisen. Die Randabschnitte mit geringerer Dicke sind auf diese Weise besonders einfach herstellbar.

Gemäß einem zweiten Aspekt der Erfindung wird die Aufgabe gelöst durch ein Innenraumbauteil für ein Fahrzeug, das Innenraumbauteil zumindest aufweisend das Einlegebauteil, ein Formhautelement und einen in einem Schäumprozess zwischen dem Einlegebauteil und dem Formhautelement eingebrachten Schaumkörper. Ein erfindungsgemäßes Innenraumbauteil ist dadurch gekennzeichnet, dass das Einlegebauteil gemäß dem ersten Aspekt der Erfindung ausgebildet ist. Sämtliche Vorteile, die ausführlich in Bezug auf ein erfindungsgemäßes Einlegebauteil gemäß dem ersten Aspekt der Erfindung beschrieben worden sind, können somit auch durch ein Innenraumbauteil für ein Fahrzeug, das unter Verwendung eines Einlegebauteils gemäß dem ersten Aspekt der Erfindung hergestellt worden ist, bereitgestellt werden.

Besonders bevorzugt kann bei einem erfindungsgemäßen Innenraumbauteil vorgesehen sein, dass der Schaumkörper PU-Schaum aufweist. PU (Polyurethan) stellt ein Material dar, das besonders gute Eigenschaften aufweist, um als Schaumkörper für ein erfindungsgemäßes Innenraumbauteil verwendet werden zu können. Insbesondere kann durch die Verwendung eines derartigen PU-Schaums ein besonders geringes Gewicht bei gleichzeitig hoher Formstabilität bereitgestellt werden. Neben PU-Schaum können auch andere Schaummaterialien für den Schaumkörper eines Innenraumbauteils verwendet werden, die bevorzugt, aber nicht zwingend, ähnliche Eigenschaften aufweisen wie PU-Schaum.

Darüber hinaus kann bei einem erfindungsgemäßen Innenraumbauteil vorgesehen sein, dass das Formhautelement eine PVC-Folie und/oder eine PU-Folie und/oder ein Slush-Element und/oder ein Platzhalterhautelement aufweist. PVC-Folien (Polyvinylchlorid) und PU-Folien stellen bevorzugte Kunststofffolien dar, die für Oberflächen von Innenraumbauteilen besonders geeignete Eigenschaften aufweisen. Ein Slush-Element stellt ebenfalls zumeist ein Kunststofffolienelement dar, dessen Oberfläche, bedingt durch einen Sinterprozess bei der Herstellung des Slush-Elements, verschiedenste Strukturen und/oder Haptiken aufweisen kann. Ein Platzhalterhautelement wiederum wird bei einem Innenraumbauteil eines Fahrzeugs verwendet, dessen Oberfläche später durch ein weiteres Formhautelement gebildet werden soll, das das Platzhalterhautelement ersetzt. Auch können andere Materialien für das Formhautelement verwendet werden, die bevorzugt aber nicht zwingend ähnliche Eigenschaften aufweisen wie die oben erwähnten Materialien. Eine besonders große Vielzahl und Variabilität von Oberflächeneigenschaften eines erfindungsgemäßen Innenraumbauteils können dadurch bereitgestellt werden.

Besonders bevorzugt kann bei einem erfindungsgemäßen Innenraumbauteil vorgesehen sein, dass das Innenraumbauteil als eine Instrumententafel ausgebildet ist. Eine derartige Instrumententafel stellt ein besonders großes und sichtbares Innenraumbauteil in einem Fahrzeug dar. Besonders hohe Ansprüche an Qualität und insbesondere Optik und Haptik werden an eine derartige Instrumententafel gestellt. Durch ein erfindungsgemäßes Innenraumbauteil, das als eine Instrumententafel ausgebildet ist, können diese Anforderungen besonders einfach und kostengünstig erfüllt werden.

Gemäß einem dritten Aspekt der Erfindung wird die Aufgabe gelöst durch ein Fahrzeug mit einem Innenraumbauteil. Ein erfindungsgemäßes Fahrzeug ist dadurch gekennzeichnet, dass das Innenraumbauteil gemäß dem zweiten Aspekt der Erfindung ausgebildet ist. Ein Innenraumbauteil gemäß dem zweiten Aspekt der Erfindung weist als Bauelement ein Einlegebauteil gemäß dem ersten Aspekt der Erfindung auf. Ein erfindungsgemäßes Fahrzeug weist somit sämtliche Vorteile auf, die in Verbindung mit einem Innenraumbauteil gemäß dem zweiten Aspekt der Erfindung sowie in Verbindung mit einem Einlegebauteil gemäß dem ersten Aspekt der Erfindung ausführlich beschrieben worden sind.

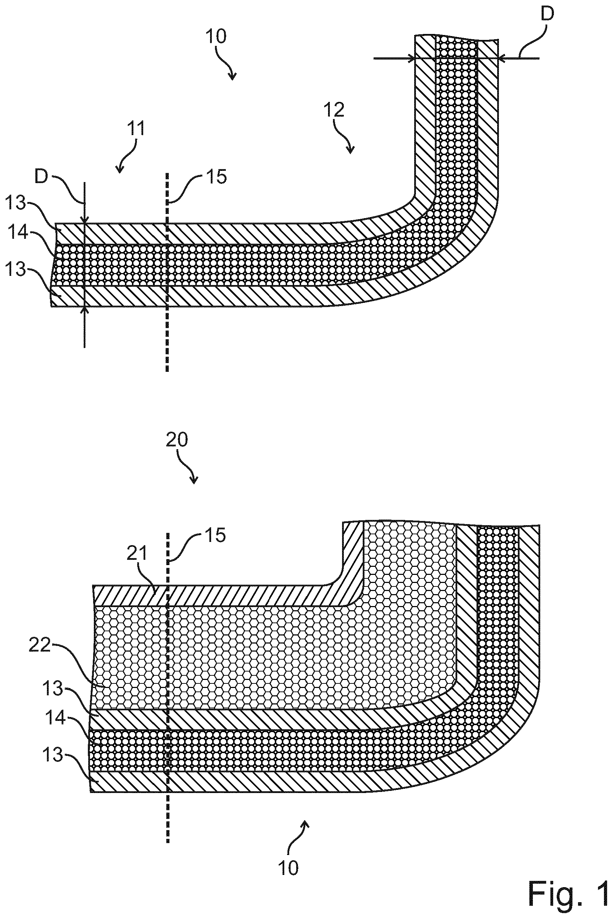

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 3 mit denselben Bezugszeichen versehen. Es zeigen schematisch:
- Figur 1: ein Einlegebauteil sowie ein Innenraumbauteil gemäß dem Stand der Technik
- Figur 2: ein Einlegebauteil sowie ein Innenraumbauteil gemäß der Erfindung,
- Figur 3: ein erfindungsgemäßes Fahrzeug.

In Fig. 1 ist ein Einlegebauteil 10 (obere Abbildung) sowie ein Innenraumbauteil 20 (untere Abbildung) gezeigt, die gemäß dem Stand der Technik ausgebildet sind. Es ist jeweils ein Ausschnitt gezeigt, der insbesondere den Übergang vom Körperabschnitt 11 zum Randabschnitt 12 des Einlegebauteils 10 zeigt. Dieser Übergang ist durch eine Beschnittgrenze 15 abgebildet. In der oberen Abbildung ist ein Einlegebauteil 10 gezeigt. Das Einlegebauteil 10 ist in einem Spritzguss-Integralschaumverfahren hergestellt und weist somit jeweils begrenzend einen Einlegeroberflächenkörper 13 sowie einen dazwischen angeordneten Einlegerschaumkörper 14 auf. Deutlich sichtbar ist, dass sowohl der Körperabschnitt 11 als auch der Randabschnitt 12 jeweils dieselbe Dicke D aufweisen. In der unteren Abbildung ist auf dem Einlegebauteil 10, das in der oberen Abbildung gezeigt ist, das Innenraumbauteil 20 geformt. Ein Formhautelement 21, beispielsweise eine PVC-Folie oder ein Slush-Element, bildet den oberen Abschluss des Innenraumbauteils 20, wobei zwischen dem Formhautelement 21 und dem Einlegebauteil 10 ein Schaumkörper 22, beispielsweise aus PU-Schaum, angeordnet ist. Nach dem Schäumprozess, indem der Schaumkörper 22 erzeugt wird, wird das Innenraumbauteil 20 an der Beschnittgrenze 15 begrenzt, und insbesondere der Randabschnitt 12 zusammen mit dem auf dem Randabschnitt 12 angeordneten Schaumkörper 22 und Formhautelement 21 abgetrennt. Der Körperabschnitt 11 des Einlegebauteils 10 verbleibt im fertig hergestellten Innenraumbauteil 20. Bereits hier ist deutlich sichtbar, dass durch die konstante Dicke D des Einlegebauteils 10 ein hoher Materialaufwand bei der Herstellung des Einlegebauteils 10 notwendig ist, der durch das Abtrennen an der Beschnittgrenze 15 verloren gehen. Auch ist durch die große Dicke D des Randabschnitts 12 der Randabschnitt 12 steif und unflexibel, so dass ein hoher Abstimmaufwand beim Einlegen in ein Schäumwerkzeug zum Einbringen des Schaumkörpers 22 notwendig ist. Auch ein Anliegen des Formhautelements 21, insbesondere am Randabschnitt 12 des Einlegebauteils 10 kann zu einer nicht mit abgebildeten Beeinträchtigung der Qualität des hergestellten Innenraumbauteils 20 führen.

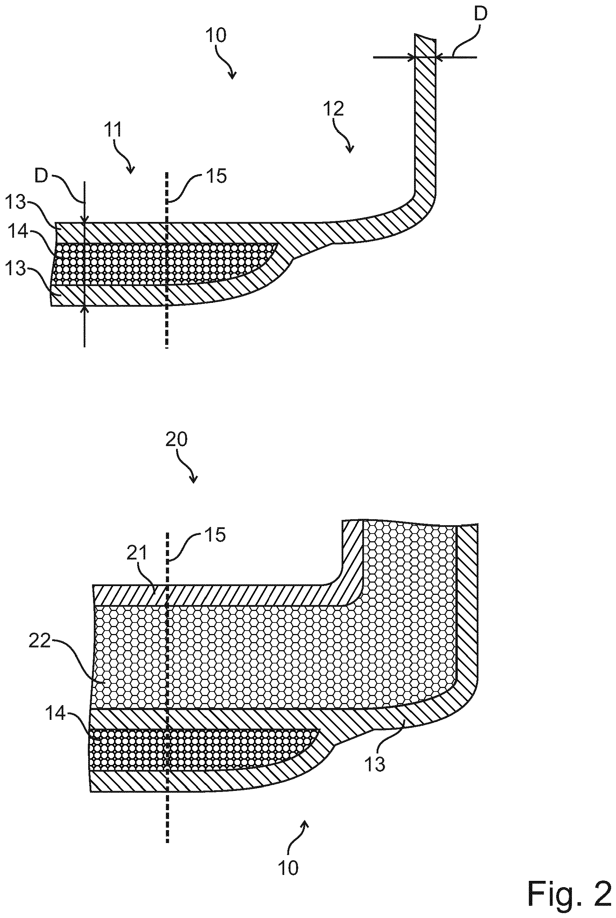

Fig. 2 zeigt nun ein erfindungsgemäßes Einlegebauteil 10 in der oberen Abbildung und in der unteren Abbildung ein mithilfe dieses erfindungsgemäßen Einlegebauteils 10 hergestelltes erfindungsgemäßes Innenraumbauteil 20. Auch dieses Einlegebauteil 10 ist in einem Spritzguss-Integralschaumverfahren hergestellt. Erfindungswesentlich ist sichtbar, dass der Randabschnitt 12 des erfindungsgemäßen Einlegebauteils 10 zumindest teilweise eine Dicke D aufweist, die geringer ist als die Dicke D des Körperabschnittes 11. Dies kann beispielsweise dadurch erreicht werden, dass ein Aufschäumen des Einlegerschaumkörpers 14 bei der Herstellung des Einlegebauteils 10 zumindest teilweise für den Randabschnitt 12 nicht erfolgt. Die geringere Dicke D des Randabschnitts 12 bringt mehrere Vorteile. Zum einen wird automatisch der Materialaufwand bei der Herstellung des Einlegebauteils 10 reduziert. Ferner ist die Stabilität des Randabschnitts 12 verringert, insbesondere kann der Randabschnitt 12 sogar zumindest teilweise flexibel ausgestaltet sein. Bauteilungenauigkeiten, insbesondere ein Bauteilverzug, des Einlegebauteils 10 können durch diesen bevorzugt flexiblen Randabschnitt 12 beim Einlegen in ein Schaumwerkzeug bei der Herstellung eines erfindungsgemäßen Innenraumbauteils 20 ausgeglichen werden. Auch der Schäumprozess selbst wird durch einen bevorzugt flexiblen Randabschnitt 12 unterstützt, da selbst dann, wenn ein Formhautelement 21 des Innenraumbauteils 20 am Randabschnitt 12 anliegen sollte, durch die Ausgestaltung des Randabschnitts 12 dieser beim Aufschäumen des Schaumkörpers 22 ausweichen kann, wodurch sich der Schaumkörper 22 nahezu ungestört entwickeln kann. Insgesamt kann ein erfindungsgemäßes Innenraumbauteil 20 durch die Verwendung eines erfindungsgemäßen Einlegebauteils 10 auf diese Weise verbessert werden.

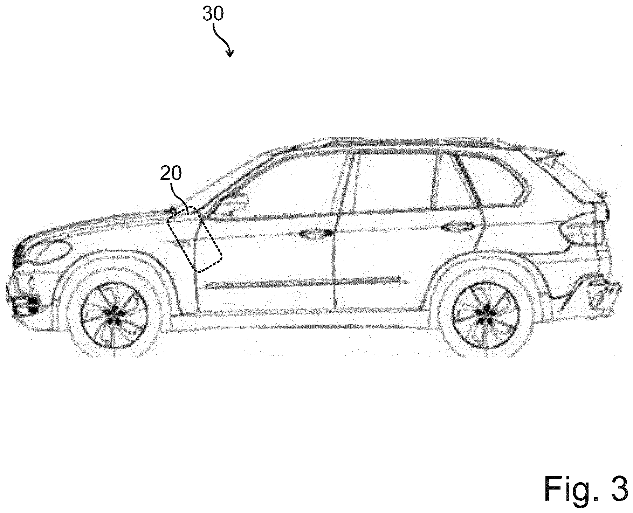

Fig. 3 zeigt ferner ein erfindungsgemäßes Fahrzeug 30, in dem ein erfindungsgemäßes Innenraumbauteil 20 verbaut ist. Das Innenraumbauteil 20 kann beispielsweise als eine Instrumententafel ausgebildet sein. Auch wenn diese Instrumententafel bzw. das Innenraumbauteil 20 nur einen kleinen Teil des gesamten Fahrzeugs 30 darstellt, kann dennoch durch die Verwendung eines erfindungsgemäßen Innenraumbauteils 20 eine Herstellung des gesamten Fahrzeugs 30 verbessert und insbesondere kostengünstiger ausgestaltet sein.

### Bezugszeichenliste

- 10: Einlegebauteil
- 11: Körperabschnitt
- 12: Randabschnitt
- 13: Einlegeroberflächenkörper
- 14: Einlegerschaumkörper
- 15: Beschnittgrenze

- 20: Innenraumbauteil
- 21: Formhautelement
- 22: Schaumkörper

- 30: Fahrzeug

- D: Dicke

## Patentansprüche

1. Innenraumbauteil (20) eines Fahrzeugs (30), wobei das Innenraumbauteil (20) zumindest ein Einlegebauteil (10), ein Formhautelement (21) und einen in einem Schäumprozess zwischen dem Einlegebauteil (10) und dem Formhautelement (21) eingebrachten Schaumkörper (22) aufweist, wobei das Einlegebauteil (10) einen Körperabschnitt (11) zum Verbleib im Innenraumbauteil (20) und einen Randabschnitt (12) zum Unterstützen der Herstellung des Innenraumbauteils (20) aufweist, **dadurch gekennzeichnet, dass** das Einlegebauteil (10) jeweils begrenzend einen Einlegeroberflächenkörper (13) sowie einen dazwischen angeordneten Einlegerschaumkörper (14) aufweist,
wobei der Randabschnitt (12) zumindest teilweise eine im Vergleich zum Körperabschnitt (11) geringere Dicke (D) aufweist, welche bei der Herstellung des Einlegebauteils (10) durch ein zumindest teilweises Aufschäumen des Einlegerschaumkörpers (14) für den Randabschnitt (12) ausgebildet ist.

2. Innenraumbauteil nach Anspruch 1,
**dadurch gekennzeichnet,**
**dass** der Randabschnitt (12) an Stellen geringerer Dicke (D) eine Dicke (D) von kleiner 1mm, insbesondere kleiner 0,8mm, bevorzugt kleiner 0,6mm, aufweist.

3. Innenraumbauteil nach Anspruch 1 oder 2,
**dadurch gekennzeichnet,**
**dass** der Randabschnitt (12) zumindest abschnittsweise flexibel ausgebildet ist.

4. Innenraumbauteil nach einem der vorangegangenen Ansprüche,
**dadurch gekennzeichnet,**
**dass** der Randabschnitt (12) umlaufend am Körperabschnitt (11) angeordnet ist.

5. Innenraumbauteil nach einem der vorangegangenen Ansprüche,
**dadurch gekennzeichnet,**
**dass** das Einlegebauteil (10) in einem Spritzgussverfahren und/oder einem Spritzguss-Integralschaumverfahren hergestellt ist.

6. Innenraumbauteil nach Anspruch 5,
**dadurch gekennzeichnet,**
**dass** das Einlegebauteil (10) in einem Spritzguss-Integralschaumverfahren hergestellt ist, wobei der Randabschnitt (12) zumindest teilweise ohne aufgeschäumte Bereiche ausgebildet ist.

7. Innenraumbauteil (20) nach einem der vorhergehenden Ansprüche,
**dadurch gekennzeichnet,**
**dass** der Schaumkörper (22) PU-Schaum aufweist.

8. Innenraumbauteil (20) nach einem der vorhergehenden Ansprüche,
**dadurch gekennzeichnet,**
**dass** das Formhautelement (21) eine PVC-Folie und/oder eine PU-Folie und/oder ein Slush-Element und/oder ein Platzhalterhautelement aufweist.

9. Innenraumbauteil (20) nach einem der vorhergehenden Ansprüche,
**dadurch gekennzeichnet,**
**dass** das Innenraumbauteil (20) als eine Instrumententafel ausgebildet ist.

10. Fahrzeug (30) mit einem Innenraumbauteil (20),
**dadurch gekennzeichnet,**
**dass** das Innenraumbauteil (20) nach einem der vorangegangenen Ansprüchen ausgebildet ist.

## Claims

1. Interior component (20) of a vehicle (30), wherein the interior component (20) comprises at least an insert component (10), a moulded skin element (21), and a foam body (22) which is introduced in a foaming process between the insert component (10) and the moulded skin element (21), wherein the insert component (10) comprises a body portion (11) for retention in the interior component (20) and an edge portion (12) for supporting the production of the interior component (20), **characterized**
**in that** the insert component (10) comprises, in each case in a delimiting manner, an insert surface body (13) and an insert foam body (14) arranged therebetween,
wherein the edge portion (12) has, at least partly, a smaller thickness (D) compared with the body portion (11), said thickness being formed during the production of the insert component (10) by at least partial foaming of the insert foam body (14) for the edge portion (12).

2. Interior component according to Claim 1,
**characterized**
**in that** the edge portion (12) has, at places of smaller thickness (D), a thickness (D) of less than 1 mm, in particular less than 0.8 mm, preferably less than 0.6 mm.

3. Interior component according to Claim 1 or 2, **characterized**
**in that** the edge portion (12) is of flexible form at least in certain portions.

4. Interior component according to one of the preceding claims,
**characterized**
**in that** the edge portion (12) is arranged on the body portion (11) in an encircling manner.

5. Interior component according to one of the preceding claims,
**characterized**
**in that** the insert component (10) is produced in an injection-moulding process and/or an injection-moulding/integral foaming process.

6. Interior component according to Claim 5, **characterized**
**in that** the insert component (10) is produced in an injection-moulding/integral foaming process, wherein the edge portion (12) is formed at least partly without foamed regions.

7. Interior component (20) according to one of the preceding claims,
**characterized**
**in that** the foam body (22) comprises PU foam.

8. Interior component (20) according to one of the preceding claims,
**characterized**
**in that** the moulded skin element (21) comprises a PVC film and/or a PU film and/or a slush element and/or a placeholder skin element.

9. Interior component (20) according to one of the preceding claims,
**characterized**
**in that** the interior component (20) is formed as an instrument panel.

10. Vehicle (30) having an interior component (20), **characterized**
**in that** the interior component (20) is formed according to one of the preceding claims.

## Revendications

1. Composant d'habitacle (20) d'un véhicule (30), le composant d'habitacle (20) comportant au moins un composant d'insertion (10), un élément de peau moulé (21) et un corps en mousse (22) introduit entre le composant d'insertion (10) et l'élément de peau moulé (21) dans un processus de moussage, le composant d'insertion (10) comportant une portion de corps (11) destinée à rester dans le composant d'habitacle (20) et une portion de bord (12) destinée à venir en appui de la réalisation du composant d'habitacle (20), **caractérisé en ce que** le composant d'insertion (10) comporte de manière limitative un corps de surface d'insertion (13) et un corps en mousse d'insertion (14) disposés entre eux, la portion de bord (12) ayant au moins partiellement une épaisseur (D) qui est plus petite que celle de la portion de corps (11) et qui est formée lors de la réalisation du composant d'insertion (10) par moussage au moins partiel du corps en mousse d'insertion (14) destiné à la portion de bord (12).

2. Composant d'habitacle selon la revendication 1, **caractérisé en ce que**
la portion de bord (12) a une épaisseur (D) inférieure à 1 mm, notamment inférieure à 0,8 mm, de préférence inférieure à 0,6 mm, aux emplacements de moindre épaisseur (D).

3. Composant d'habitacle selon la revendication 1 ou 2, **caractérisé en ce que** la portion de bord (12) est souple au moins par portions.

4. Composant d'habitacle selon l'une des revendications précédentes, **caractérisé en ce que** la portion de bord (12) est disposée circonférentiellement sur la portion de corps (11).

5. Composant d'habitacle selon l'une des revendications précédentes, **caractérisé en ce que** le composant d'insertion (10) est réalisé selon un procédé de moulage par injection et/ou un procédé de mousse structurée moulée par injection.

6. Composant d'habitacle selon la revendication 5, **caractérisé en ce que** le composant d'insertion (10) est réalisé selon un procédé de mousse structurée moulée par injection, la portion de bord (12) étant au moins partiellement conçue sans zones moussées.

7. Composant d'habitacle (20) selon l'une des revendications précédentes, **caractérisé en ce que** le corps en mousse (22) comporte de la mousse PU.

8. Composant d'habitacle (20) selon l'une des revendications précédentes, **caractérisé en ce que** l'élément de peau moulé (21) comporte un film PVC et/ou un film PU et/ou un élément pâteux et/ou un élément de peau intercalaire.

9. Composant d'habitacle (20) selon l'une des revendications précédentes, **caractérisé en ce que** le composant d'habitacle (20) est conçu comme un tableau de bord.

10. Véhicule (30) comprenant un composant d'habitacle (20), **caractérisé en ce que** le composant d'habitacle (20) est conçu selon l'une des revendications précédentes.
